# EUROPEAN PATENT SPECIFICATION

(11) **EP 1 663 904 B1**
(45) Date of publication and mention of the grant of the patent: **14.02.2007**
(21) Application number: 04764241.8
(22) Date of filing: 18.08.2004
(51) Int. Cl.: C04B 24/12

(54) **ACCELERATOR COMPOSITION FOR ACCELERATING SETTING AND/OR HARDENING OF A CEMENTITIOUS COMPOSITION**
BESCHLEUNIGERZUSAMMENSETZUNG ZUR BESCHLEUNIGUNG DES ERSTARRENS UND/ODER ERHÄRTENS EINER ZEMENTZUSAMMENSETZUNG
COMPOSITION D'ACCELERATEUR PERMETTANT D'ACCELERER LA PRISE ET/OU LE DURCISSEMENT D'UNE COMPOSITION DE CIMENT

(30) Priority: 12.09.2003 GB 0321331
(43) Date of publication of application: 07.06.2006
(73) Proprietor: Construction Research & Technology GmbH, 83308 Trostberg (DE)
(72) Inventor: WEIBEL, Martin, 8048 Zürich (CH)
(86) International application number: PCT/EP2004/009255
(87) International publication number: WO 2005/026072

(56) References cited:
- EP-A- 0 558 336
- WO-A-84/04089
- GB-A- 650 745
- DATABASE WPI Derwent Publications Ltd., London, GB; AN 1985-059647 XP002306994 & JP 60 016845 A (KOWA CHEM IND LTD; YUKI GOSEI YAKUHIN KOGYO KK) 28 January 1985 (1985-01-28)

## Description

This invention relates to an accelerator composition for accelerating setting and/or hardening of a cementitious composition, a method of applying a cementitious composition comprising an accelerator composition and a hardened cementitious layer.

Especially when sprayed onto a substrate, a cementitious composition, such as concrete, must set very quickly. For such a use, powerful accelerators including sodium aluminate and alkali metal hydroxide have been used. However, since these accelerators are highly alkaline, they result in very unpleasant handling and working conditions. Therefore, low alkali and alkali-free accelerators have been proposed containing aluminium compounds. In addition, a variety of other compounds have been added in such accelerators, for instance acids.

Apart from the working conditions, an accelerator for cementitious compositions should also exhibit an acceptable stability, since it is often used in more extreme conditions encountered in tunnels and stored over a long time period in high ambient temperatures. Such conditions may result in gelling of the accelerator or in precipitation of material dissolved or dispersed therein. Consequently, it is crucial for a practical accelerator not only to improve the setting and the hardening of the cementitious composition, but also to exhibit a reasonable shelf-life.

The object of the invention is to provide an improved accelerator composition for cementitious compositions.

Surprisingly it has been found that α-amino acids improve the storage stability, especially at elevated temperatures (≥30°C), of setting and/or hardening accelerators for hydraulic binders, i.e. cementitious material, and/or the performance thereof. The invention therefore provides an accelerator composition for accelerating setting and/or hardening of a cementitious composition, comprising at least one α-amino acid.

In an accelerator composition according to the invention, the α-amino acid may be present at a dosage of about 0.1- 50 %, preferably about 0.2 - 15 %, most preferably about 0.5 - 10 % per weight of the accelerator composition. Including an α-amino acid within these ranges into an accelerator composition for cementitious materials ensures a longer storage stability of the accelerator composition and/or an improved setting and/or hardening of the cementitious material it is added to.

The α-amino acid is preferably selected from alanine, cystine, cysteine, aspartate, glutamate, phenylalanine, glycine, histidine, isoleucine, lysine, leucine, methionine, asparagines, asparaginic acid, proline, glutamine, glutaminic acid, arginine, serine, threonine, valine, tryptophan and tyrosine and/or an artificial amino acid, preferably selected from the D or LD configurations of the above mentioned compounds, more preferably D alanine, LD alanine and β-alanine. Furthermore, basic and acidic amino acids may be used in the form of their salts, e.g. above mentioned glutamate. These compounds are readily available and, furthermore, promote the shelf-life of the accelerator and/or the setting and/or hardening properties of the cementitious composition to which the accelerator has been added.

Moreover, the accelerator composition as defined above may be an alkali-free accelerator, preferably comprising at least one aluminium compound, for instance an aluminium salt and/or aluminium hydroxide. Therefore, the accelerator composition according to the invention does not only have a longer storage stability, and/or does not only improve the setting and/or hardening of the cementitious mixture containing the accelerator composition, but also results in acceptable working conditions during processing of the cementitious composition.

Optionally, one or more other salts, such as sulphates, and/or one or more acids may be included in the accelerator composition of the invention. Preferred sulphates are aluminium sulphate and/or magnesium sulphate. Suitable inorganic acids are selected from hydrofluoric acid, phosphoric acid, phosphorous acid, and/or pyrophosphoric acid. Organic acids, such as formic acid, citric acid, lactic acid, and/or ascorbic acid may also be present. Furthermore, one or more amines, e.g. alkanolamines, may optionally be included.

The invention is also directed to an accelerator composition for accelerating setting and hardening of a cementitious composition containing α-amino acid and aluminium salts.

Aluminium salts suitable for the invention comprise preferably aluminium sulphate and aluminium hydroxide. The aluminium sulphate for use in this invention may be selected from any such material known to the art. Preferred materials are hydrated aluminium sulphates of which many commercial grades are available. Further, any commercially-available hydrated aluminium, such as amorphous aluminium hydroxide may be used. Although all such aluminium hydroxides will give satisfactory results, it holds true that the more recent the date of manufacture, the better the result. Aluminium hydroxides containing a small proportion of aluminium carbonate (up to 5 wt%) are easier to dissolve and therefore are preferred materials.

The weight percent proportions of the components, which are combined to form the accelerating composition according to the invention are for example

| Component | Widest Range (wt %) | Preferred Range (wt %) |
|---|---|---|
| Aluminium Sulphate | 10-60 | 20-35 |
| Aluminium Hydroxide | 0-30 | 0-15 |
| α-Amino Acid | 0.1-50 | 0.5-10 |
| Hydrofluoric acid | 0-50 | 0-10 |
| Formic acid | 0-50 | 0-10 |

the remainder to 100 wt % being water.

The accelerator composition can also contain amines, preferably dialkanolamine.

In use, especially when injected to a fluid cementitious composition being conveyed to a spray nozzle, the dose of the accelerator composition is typically from 3 - 12 % by weight based on the weight of the cement compound included in the cementitious composition.

Therefore, the invention encompasses a method of applying a cementitious composition to a substrate, preferably by spraying through a spray nozzle, comprising the steps of mixing a batch of fluid cementitious composition and adding an accelerator composition as defined above, preferably by injecting it to the cementitious composition at the spray nozzle. By this procedure the setting and/or hardening of the cementitious composition is reliably accelerated, while, especially in case of applying the cementitious composition by spraying, an untimely hardening is avoided.

Moreover, according to the invention a hardened cementitious layer is provided, applied to a substrate using an accelerator as defined above, preferably by spraying through a spray nozzle.

The invention is directed to the use of an accelerator composition as defined above for preparing a cementitious composition, and, furthermore, to the use of the accelerator composition as defined above in a method of applying a cementitious composition. Thereby, a faster setting and/or a higher early and/or final strength of the cementitious composition, and/or an improved stability of the accelerator is ensured. Furthermore, the setting of the cementitious composition, such as concrete, may in some cases of accelerator composition be slower as compared to the prior art, which is beneficial for the strength of the resulting hardened cementitious layer, since the hardening cementitious layer is allowed to develop a more stable structure.

The invention is now illustrated with reference to the following non-limiting examples in which all parts and percentages are expressed by weight.

### Examples

Several accelerators according to the invention and several reference accelerators are each added to a mortar mix A or B having the following constitution according to European Standard 196-1:

| | Mortar A | Mortar B |
|---|---|---|
| Portland cement | 1 part (CEM 42.5 IV/A; 450 g) | 1 part (CEM 42.5 II/A-L; 450 g) |
| Norm Sand (EN 196) | 3 parts (1350 g) | 3 parts (1350 g) |
| W/C | 0.44 | 0.47 |
| Acrylic polycarboxylate based superplasticizer (Glenium ® 51) | 0.6 % by weight cement | 0.1 % by weight cement |

### Examples 1 and 2

Two accelerators according to the invention and one reference accelerator were prepared having the following compositions:

| Composition of the Accelerator | Example 1 | Example 2 | Reference 1 |
|---|---|---|---|
| Water | 37 | 37 | 37 |
| Aluminium Sulphate (17% Al₂O₃) | 40 | 40 | 40 |
| Aluminium Hydroxide (50 % Al₂O₃) | 9 | 9 | 9 |
| Hydrofluoric Acid (40 %) | 14 | 14 | 14 |
| Glycine | 2 | | |
| Asparaginic Acid | | 3 | |
| Total Parts | 102 | 103 | 100 |

In order to assess the storage stability of Example 1 and of Reference 1, the occurrence of a precipitation after several months of storage at 30 and 40 °C was observed. The results are as follows:

| Storage Stability | Example 1 N | Reference 1 n |
|---|---|---|
| Significant Precipitation after n months at 30°C | 3.5 | 3 |
| Significant Precipitation after n months at 40°C | 3.5 | 2 |

As is apparent from the above table, the accelerator composition according to the invention comprising glycine shows a significant precipitation after 3.5 months at elevated temperatures of 30 and 40°C. In contrast thereto, a significant precipitation of the reference accelerator was visible already after 3 months at 30°C and after 2 months at 40°C storage temperature. Consequently, the accelerator containing glycine has a clearly improved storage stability as compared to the reference accelerator, demonstrating that the accelerator of the invention has a superior stability during storage, particularly at elevated temperatures.

For evaluating performance of the accelerator composition according to the invention, 3 mortar mixtures were prepared according to EN 196-1, each comprising mortar A and one of the above accelerators in an amount of 6 % by weight cement. The setting times of the resulting mortars were measured by the Vicat test procedure of EN 196-3. In addition, tests for compressive strength according to EN 196-1 were conducted. The results are shown in the following table:

| Strength Development | Example 1 | Example 2 | Reference 1 |
|---|---|---|---|
| Initial set (min) | 1 - 2 | 1 | 1 - 2 |
| Final set (min) | 11 | 5 | 5 |
| 6 hr strength (MPa) | 1.4 | 4.2 | 0.7 |
| 1 day strength (MPa) | 20.2 | 13.5 | 15.0 |
| 7 day strength (MPa) | 46.5 | 40 | 37.3 |

Both mortar mixtures comprising the accelerator according to the invention show an improved strength as compared to the mortar of Reference 1. Hence, mixing an amino acid into an accelerator comprising aluminium compounds and an acid promotes the hardening of the cementitious composition. In addition, the accelerator of Example 2 results in a setting behaviour similar to the reference, whereas the mortar of Example 1 reveals a slower setting. However, the slow set of Example 1 results in a superior strength after 6 hours, 1 and 7 days.

### Example 3

The storage stability and the strength development of an accelerator comprising asparaginic acid according to the invention were compared with a reference accelerator containing phosphorous acid. The accelerator compositions of Example 3 and of Reference 3 were as follows:

| Composition of the Accelerator | Example 3 | Reference 3 |
|---|---|---|
| Water | 37 | 37 |
| Aluminium sulphate (17 % Al₂O₃) | 40 | 40 |
| Aluminium hydroxide (50 % Al₂O₃) | 13 | 13 |
| Hydrofluoric acid (40 %) | 10 | 10 |
| Phosphorous acid | | 2 |
| Asparaginic acid | 8 | |
| Total parts | 108 | 102 |

The storage stability of the accelerators was measured according to the procedure of Examples 1 and 2. The results are as follows:

| Storage Stability | Example 3 n | Reference 3 n |
|---|---|---|
| Significant Precipitation after n months at 30°C | 3.5 | 3 |
| Significant Precipitation after n months at 40°C | 3.5 | 2 |

As is visible from the above table, the accelerator according to the invention shows an improved stability during storage as compared to the accelerator of Reference 3.

The strength development of mixtures consisting of the above mortar A and the accelerators of Example 3 and Reference 3, respectively, was assessed corresponding to the procedure of Examples 1 and 2. The mechanical properties of mortar A comprising the accelerators of Example 3 or Reference 3 in an amount of 6 % by weight cement were as follows:

| Strength Development | Example 3 | Reference 3 |
|---|---|---|
| Initial set (min) | 1-2 | 1-2 |
| Final set (min) | 5.5 | 5.5 |
| 6 hr strength (MPa) | 3.1 | 2.9 |
| 1 day strength (MPa) | 10.2 | 10.5 |
| 7 day strength (MPa) | 39.7 | 40.2 |

The results of the setting and strength development of Example 3 are similar to the results of Reference 3. Consequently, the substitution of phosphorous acid by asparaginic acid appears to have only a small influence on the mechanical properties of mortar A.

### Example 4

An accelerator according to the invention and a reference accelerator were prepared and each mixed with mortar B, the amount of each accelerator being 6 % by weight of cement. The compositions of the accelerators are shown in the following table:

| Composition of the Accelerator | Example 4 | Reference 4 |
|---|---|---|
| Water | 37 | 37 |
| Aluminium sulphate (17 % Al₂O₃) | 40 | 40 |
| Aluminium hydroxide (50 % Al₂O₃) | 13 | 13 |
| Formic acid (85 %) | 8 | 8 |
| Glycine | 4 | |
| Total parts | 102 | 98 |

The setting and strength development of the resulting mortar mixtures were evaluated using the procedure of Examples 1 and 2. The results are as follows:

| Strength Development | Example 4 | Reference 4 |
|---|---|---|
| Initial set (min) | 2.8 | 1.5 |
| Final set (min) | 14.8 | 8 |
| 6 hr strength (MPa) | 0.4 | 1.8 |
| 1 day strength (MPa) | 19.8 | 16.1 |
| 7 day strength (MPa) | 36.9 | 29.8 |

The results of Example 4, as well as of Example 1, show that adding an amino acid into an accelerator composition provides for mortars having a slower setting and an improved final strength as compared to the reference mortar.

### Example 5

An alkali-free accelerator comprising aluminium sulphate and diethanol amine was compared with an accelerator composition additionally containing glycine. The compositions of the two accelerators are shown in the following table:

| Composition of the Accelerator | Example 5 | Reference 5 |
|---|---|---|
| Water | 31.16 | 31.8 |
| Aluminium sulphate (17 % Al₂O₃) | 58.8 | 60 |
| Diethanol amine | 6.37 | 6.5 |
| Sepiolite magnesium silicate | 1.47 | 1.5 |
| Glycerol | 0.2 | 0.2 |
| Glycine | 2 | |
| Total parts | 100 | 100 |

For evaluating the performance of both accelerators, they were mixed with mortar B in an amount of 6 % per weight of cement. The strength development was tested as explained above for Examples 1 and 2, showing the following results:

| Strength Development | Example 5 | Reference 5 |
|---|---|---|
| Initial set (min) | 10 | 10 |
| Final set (min) | 49 | 75 |
| 6 hr strength (MPa) | 2.5 | 0.8 |
| 1 day strength (MPa) | 27.9 | 29.0 |
| 7 day strength (MPa) | 46.2 | 45.0 |

As is visible from the above table, adding glycine into an alkali-free accelerator results in a faster setting as well as in an improved early (6 hr) and final (7 day) strength.

### Example 6

For assessing storage stability, an accelerator according to the invention and a corresponding reference accelerator representing the prior art were prepared and observed during storage as explained above in Examples 1 and 2.

| Composition of the Accelerator | Example 6 | Reference 6 |
|---|---|---|
| Water | 37 | 37 |
| Aluminium sulphate (17 % Al₂O₃) | 40 | 40 |
| Aluminium hydroxide (50 % Al₂O₃) | 18 | 18 |
| Hydrofluoric acid (40 %) | 10 | 10 |
| Phosphorous acid | 2 | 2 |
| Glycine | 2 | |
| Total parts | 109 | 107 |

| Storage Stability | Example 6 n | Reference 6 n |
|---|---|---|
| Significant Precipitation after n months at 30°C | 3.5 | 1.5 |
| Significant Precipitation after n months at 40°C | 1.5 | 0.5 |

It is clearly demonstrated by the above table that the accelerator comprising glycine according to the invention has an improved stability during storage as compared to the accelerator not comprising glycine.

The above test results show that the accelerators of Examples 1 to 6 comprising an α-amino acid are superior with respect to their storage stability and/or the final setting and/or the early and/or final strength of the cementitious material they are added to. Especially in Example 1, both the storage stability of the accelerator and the final strength of the cementitious material are improved as compared to the corresponding references. By Examples 1 and 4 it is demonstrated that an accelerator containing an α-amino acid may provide for a slow setting of a cementitious material it is added to, which may be beneficial for the strength of the resulting hardened cementitious material.

Thus, the accelerator composition according to the invention shows a superior performance by providing an improved setting and/or improved mechanical properties to a cementitious composition, and/or by having a superior storage stability, especially at elevated temperatures.

## Claims

1. An accelerator composition for accelerating setting and/or hardening of a cementitious composition, comprising at least one α-amino acid.

2. An accelerator composition according to claim 1, wherein the α-amino acid is present at a dosage of 0.1 - 50 % per weight of the accelerator composition.

3. An accelerator composition according to claim 1 or 2, wherein the α-amino acid is present at a dosage of 0,2 - 15 % per weight of the accelerator composition.

4. An accelerator composition according to one of the preceding claims, wherein the α-amino acid is a natural amino acid, selected from alanine, cystine, cysteine, aspartate, glutamate, phenylalanine, glycine, histidine, isoleucine, lysine, leucine, methionine, asparagines, proline, glutamine, arginine, serine, threonine, valine, tryptophan and tyrosine and/or an artificial amino acid, selected from the D or LD configurations of the natural amino acids.

5. An accelerator composition according to claim 4, wherein the artificial amino acid selected from the D or LD configurations of the natural amino acids is selected from D alanine, LD alanine and β-alanine.

6. An accelerator composition according to one of the preceding claims, wherein the accelerator composition is an alkali-free accelerator comprising at least one aluminium salt.

7. An accelerator composition according to one of the preceding claims, comprising an acid, which is at least one of formic acid, hydrofluoric acid, phosphoric acid, phosphorous acid, and pyrophosphoric acid, and/or a sulphate, which is at least one of aluminium sulphate and magnesium sulphate.

8. An accelerator composition according to claim 1, containing aluminium sulphate and/or aluminium hydroxide.

9. A method of applying a cementitious composition to a substrate, by spraying through a spray nozzle, comprising the steps of mixing a batch of fluid cementitious composition and adding an accelerator composition according to one of claims 1 to 8, by injecting the accelerator composition to the cementitious composition at the spray nozzle.

10. A hardened cementitious layer applied to a substrate by a method according to claim 9.

## Patentansprüche

1. Beschleunigerzusammensetzung zur Beschleunigung des Abbindens und/oder Erhärtens einer zementartigen Zusammensetzung, umfassend mindestens eine α-Aminosäure.

2. Beschleunigerzusammensetzung nach Anspruch 1, wobei die α-Aminosäure in einer Dosierung von 0,1 bis 50 Gew.-% der Beschleunigerzusammensetzung vorliegt.

3. Beschleunigerzusammensetzung nach Anspruch 1 oder 2, wobei die α-Aminosäure in einer Dosierung von 0,2 bis 15 Gew.-% der Beschleunigerzusammensetzung vorliegt.

4. Beschleunigerzusammensetzung nach einem der vorstehenden Ansprüche, wobei die α-Aminosäure für eine natürliche Aminosäure steht, die ausgewählt ist aus Alanin, Cystin, Cystein, Aspartat, Glutamat, Phenylalanin, Glycin, Histidin, Isoleucin, Lysin, Leucin, Methionin, Asparaginen, Prolin, Glutamin, Arginin, Serin, Threonin, Valin, Tryptophan und Tyrosin und/oder einer künstlichen Aminosäure, die ausgewählt ist aus den D- oder LD-Konfigurationen der natürlichen Aminosäuren.

5. Beschleunigerzusammensetzung nach Anspruch 4, wobei die künstliche Aminosäure, die ausgewählt ist aus den D- oder LD-Konfigurationen der natürlichen Aminosäuren, ausgewählt ist aus D-Alanin, LD-Alanin und β-Alanin.

6. Beschleunigerzusammensetzung nach einem der vorstehenden Ansprüche, wobei die Beschleunigerzusammensetzung ein alkalifreier Beschleuniger ist, der mindestens ein Aluminiumsalz umfasst.

7. Beschleunigerzusammensetzung nach einem der vorstehenden Ansprüche, umfassend eine Säure, die für mindestens eine steht von Ameisensäure, Fluorwasserstoffsäure, Phosphorsäure, phosphorige Säure und Pyrophosphorsäure und/oder ein Sulfat, das mindestens eines ist von Aluminiumsulfat und Magnesiumsulfat.

8. Beschleunigerzusammensetzung nach Anspruch 1, enthaltend Aluminiumsulfat und/oder Aluminiumhydroxid.

9. Verfahren zur Auftragung einer zementartigen Zusammensetzung auf ein Substrat durch Sprühen oder Spritzen durch eine Sprüh- oder Spritzdüse, umfassend die Stufen von Mischen eines Gemenges aus flüssiger zementartiger Zusammensetzung und Zugabe einer Beschleunigerzusammensetzung nach einem der Ansprüche 1 bis 8 durch Injektion der Beschleunigerzusammensetzung in die zementartige Zusammensetzung an der Spritz- oder Sprühdüse.

10. Erhärtete zementartige Schicht, die aufgebracht ist auf ein Substrat nach einem Verfahren nach Anspruch 9.

## Revendications

1. Composition accélératrice pour accélérer la prise et/ou le durcissement d'une composition cimentaire, comprenant au moins un acide α-aminé.

2. Composition accélératrice selon la revendication 1, dans laquelle l'acide α-aminé est présent en une quantité de 0,1 à 50 % en poids par rapport à la composition accélératrice.

3. Composition accélératrice selon la revendication 1 ou 2, dans laquelle l'acide α-aminé est présent en une quantité de 0,2 à 15 % en poids par rapport à la composition accélératrice.

4. Composition accélératrice selon l'une des revendications précédentes, dans laquelle l'acide α-aminé est un acide aminé naturel choisi parmi l'alanine, la cystine, la cystéine, l'aspartate, le glutamate, la phénylalanine, la glycine, l'histidine, l'isoleucine, la lysine, la leucine, la méthionine, les asparagines, la proline, la glutamine, l'arginine, la sérine, la thréonine, la valine, le tryptophane et la tyrosine et/ou un acide aminé artificiel choisi parmi les configurations D ou LD des acides aminés naturels.

5. Composition accélératrice selon la revendication 4, dans laquelle l'acide aminé artificiel choisi parmi les configurations D ou LD des acides aminés naturels est choisi parmi la D-alanine, la LD-alanine et la β-alanine.

6. Composition accélératrice selon l'une des revendications précédentes, dans laquelle la composition accélératrice est un accélérateur sans alcali comprenant au moins un sel d'aluminium.

7. Composition accélératrice selon l'une des revendications précédentes, comprenant un acide qui est au moins un acide choisi parmi l'acide formique, l'acide fluorhydrique, l'acide phosphorique, l'acide phosphoreux et l'acide pyrophosphorique, et/ou un sulfate, qui est au moins un sulfate choisi parmi le sulfate d'aluminium et le sulfate de magnésium.

8. Composition accélératrice selon la revendication 1, contenant du sulfate d'aluminium et/ou de l'hydroxyde d'aluminium.

9. Procédé d'application d'une composition cimentaire sur un substrat, par pulvérisation à travers une buse de pulvérisation, comprenant les étapes consistant à mélanger un lot de composition cimentaire fluide et à ajouter une composition accélératrice selon l'une des revendications 1 à 8, par injection de la composition accélératrice dans la composition cimentaire au niveau de la buse de pulvérisation.

10. Couche cimentaire durcie appliquée sur un substrat par un procédé selon la revendication 9.
